# EUROPEAN PATENT SPECIFICATION

(11) **EP 1 302 933 B1**
(45) Date of publication and mention of the grant of the patent: **08.09.2004**
(21) Application number: 02028938.5
(22) Date of filing: 26.05.2000
(51) Int. Cl.: G11B 5/66

(54) **Magnetic recording medium**
Magnetisches Aufzeichnungsmittel
Moyen d' enregistrement magnétique

(30) Priority: 08.06.1999 JP 16132999; 07.04.2000 JP 2000107075; 07.04.2000 JP 2000107071; 07.04.2000 JP 2000107076; 07.04.2000 JP 2000107074; 07.04.2000 JP 2000107072
(43) Date of publication of application: 16.04.2003
(62) Divisional of application: 00304517.6
(73) Proprietor: FUJITSU LIMITED, Kawasaki-shi, Kanagawa 211-8588 (JP)
(72) Inventor: Abarra, E. Noel, c/oFujitsu Limited, Kawasaki-shi, Kanagawa, 211-8588 (JP); Okamoto, Iwao, c/oFujitsu Limited, Kawasaki-shi, Kanagawa, 211-8588 (JP); Mizoshita, Yoshifumi, c/oFujitsu Limited, Kawasaki-shi, Kanagawa, 211-8588 (JP); Yoshida, Yuki, c/oFujitsu Limited, Kawasaki-shi, Kanagawa, 211-8588 (JP); Umeda, Hisashi, c/oFujitsu Limited, Kawasaki-shi, Kanagawa, 211-8588 (JP); Suzuki, Masaya, c/oFujitsu Limited, Kawasaki-shi, Kanagawa, 211-8588 (JP); Akimoto, Hideyuki, c/oFujitsu Limited, Kawasaki-shi, Kanagawa, 211-8588 (JP); Sato, Hisateru, c/oFujitsu Limited, Kawasaki-shi, Kanagawa, 211-8588 (JP); Kaitsu, Isatake, c/oFujitsu Limited, Kawasaki-shi, Kanagawa, 211-8588 (JP)
(74) Representative: Fenlon, Christine Lesley

(56) References cited:
- US-A- 5 147 732
- US-A- 5 843 569
- US-A- 5 851 643

## Description

The recording density of longitudinal magnetic recording media, such-as magnetic disks, has been increased considerably, due to the reduction of medium noise and the development of magnetoresistive and high-sensitivity spin-valve heads. A typical magnetic recording medium is comprised of a substrate, an underlayer, a magnetic layer, and a protection layer which are successively stacked in this order. The underlayer is made of Cr or a Cr-based alloy, and the magnetic layer is made of a Co-based alloy.

Various methods have been proposed to reduce the medium noise. For example, Okamoto et al., "Rigid Disk Medium For 5 Gbit/in² Recording", AB-3, Intermag '96 Digest, proposes decreasing the grain size and size distribution of the magnetic layer by reducing the magnetic layer thickness by the proper use of an underlayer made of CrMo, and U.S. Patent No.5,693,426 proposes the use of an underlayer made of NiAl. Further, Hosoe et al., "Experimental Study of Thermal Decay in High-Density Magnetic Recording Media", IEEE Trans. Magn. Vol.33, 1528 (1997), for example, proposes the use of an underlayer made of CrTiB. The underlayers described above also promote c-axis orientation of the magnetic layer in a plane which increases the remanent magnetization and the thermal stability of written bits. In addition, proposals have been made to reduce the thickness of the magnetic layer, to increase the resolution or to decrease the transition width between written bits. Furthermore, proposals have been made to decrease the exchange coupling between grains by promoting more Cr segregation in the magnetic layer which is made of CoCr-based alloy.

However, as the grains of the magnetic layer become smaller and more magnetically isolated from each other, the written bits become unstable due to thermal activation and to demagnetizing fields which increase with linear density. Lu et al., "Thermal Instability at 10 Gbit/in² Magnetic Recording", IEEE Trans. Magn. Vol.30, 4230 (1994), demonstrated, by micromagnetic simulation, that exchange-decoupled grains having a diameter of 10 nm and ratio KᵤV/k_{B}T-60 in 400 kfci di-bits are susceptible to significant thermal decay, where Kᵤ denotes the magnetic anisotropy constant, V denotes the average magnetic grain volume, k_{B} denotes the Boltzmann constant, and T denotes the temperature. The ratio KᵤV/k_{B}T is also referred to as a thermal stability factor.

It has been reported in Abarra et al., "Thermal Stability of Narrow Track Bits in a 5 Gbit/in² Medium", IEEE Trans. Magn. Vol.33, 2995 (1997), that the presence of intergranular exchange interaction stabilizes written bits, by MFM studies of annealed 200 kfci bits on a 5 Gbit/in² CoCrPtTa/CrMo medium. However, more grain decoupling is essential for recording densities of 20 Gbit/in² or greater.

The obvious solution has been to increase the magnetic anisotropy of the magnetic layer. But unfortunately, the increased magnetic anisotropy places a great demand on the head write field which degrades the "overwrite" performance which is the ability to write over previously written data.

In addition, the coercivity of thermally unstable magnetic recording media increases rapidly with decreasing switching time, as reported in He et al., "High Speed Switching in Magnetic Recording Media", J. Magn. Magn. Mater. Vol.155, 6 (1996), for magnetic tape media, and in J. H. Richter, "Dynamic Coervicity Effects in Thin Film Media", IEEE Trans. Magn. Vol.34, 1540 (1997), for magnetic disk media. Consequently, the adverse effects are introduced in the data rate, that is how fast data can be written on the magnetic layer and the amount of head field required to reverse the magnetic grains.

On the other hand, another proposed method of improving the thermal stability increases the orientation ratio of the magnetic layer, by appropriately texturing the substrate under the magnetic layer. For example, Akimoto et al., "Relationship Between Magnetic Circumferential Orientation and Magnetic Thermal Stability", J. Magn. Magn. Mater. vol.193, pp.240-242(1999), in press, report, through micromagnetic simulation, that the effective ratio KᵤV/k_{B}T is enhanced by a slight increase in the orientation ratio. This further results in a weaker time dependence for the coercivity which improves the overwrite performance of the magnetic recording medium, as reported in Abarra et al., "The Effect of Orientation Ratio on the Dynamic Coercivity of Media for >15 Gbit/in² Recording", IEEE Trans. Magn. vol.35, pp.2709-2711, 1999.

Furthermore, keepered magnetic recording media have been proposed for thermal stability improvement. The keeper layer is made up of a magnetically soft layer parallel to the magnetic layer. This soft layer can be disposed above or below the magnetic layer. Oftentimes, a Cr isolation layer is interposed between the soft layer and the magnetic layer. The soft layer reduces the demagnetizing fields in written bits on the magnetic layer. However, coupling the magnetic layer to a continuously-exchanged coupled soft layer defeats the purpose of decoupling the grains of the magnetic layer. As a result, the medium noise increases.

Various methods have been proposed to improve the thermal stability and to reduce the medium noise. However, the proposed methods do not provide a considerable improvement of the thermal stability of written bits, thereby making it difficult to greatly reduce the medium noise. In addition, some of the proposed methods introduce adverse effects on the performance of the magnetic recording medium due to the measures taken to reduce the medium noise.

More particularly, in order to obtain a thermally stable performance of the magnetic recording medium, it is conceivable to (i) increase the magnetic anisotropy constant Kᵤ, (ii) decrease the temperature T or, (iii) increase the grain volume V of the magnetic layer. However, measure (i) increases the coercivity, thereby making it more difficult to write information on the magnetic layer. In addition, measure (ii) is impractical since in magnetic disk drives, for example, the operating temperature may become greater than 60° C. Furthermore, measure (iii) increases the medium noise as described above. As an alternative for measure (iii), it is conceivable to increase the thickness of the magnetic layer, but this would lead to deterioration of the resolution.

Accordingly, it is desirable to provide a magnetic recording medium in which the thermal stability of written bits can be improved without increasing the medium noise, so as to enable reliable high-density recording without introducing adverse effects on the performance of the magnetic recording medium, that is, unnecessarily increasing the magnetic anisotropy.

US-A-5851643 discloses a magnetic recording medium with a magnetic film made from at least two layers stacked via a non-magnetic intermediate layer. The magnetic film is formed on a structure control underlayer situated on a non-magnetic substrate. However, unlike the present invention, the two magnetic layers do not have anti-parallel magnetizations.

US-A-5247732 proposes the use of multilayer structures with different magnetizations in order to improve the S/N ratio.

According to the present invention there is provided a magnetic recording medium comprising:
at least one exchange layer structure; and
a magnetic layer provided on the exchange layer structure;
said exchange layer structure including a ferromagnetic layer and a non-magnetic coupling layer provided on the ferromagnetic layer;
at least one of said ferromagnetic layer and said magnetic layer having a granular layer texture in which ferromagnetic crystal grains are uniformly distributed within a non-magnetic base material; characterised in that said ferromagnetic layer and magnetic layer are exchange-coupled and have anti-parallel magnetizations. According to the magnetic recording medium of the present invention, it is possible to provide a magnetic recording medium which can improve the thermal stability of written bits, so as to enable reliable high-density recording without degrading the overwrite performance. By employing the granular layer texture which is effective in reducing noise for at least the ferromagnetic layer of the exchange layer structure and the magnetic layer which is provided on the exchange layer structure, it is possible to further reduce the medium noise while further improving the thermal stability of the written bits.

The magnetic recording medium may comprise at least one additional exchange layer structure provided between the aforementioned exchange layer structure and the magnetic layer, where the exchange layer structures have a granular layer texture, the additional exchange layer structure has a granular layer with a magnetic anisotropy smaller than that of a granular layer of the aforementioned exchange layer structure, and the granular layers of the exchange layer structures have magnetization directions which are mutually antiparallel.

The magnetic recording medium may comprise at least an additional exchange layer structure provided between the aforementioned exchange layer structure and the magnetic layer, where the exchange layer structures have a granular layer texture , the additional exchange layer structure has a granular layer with a remanence magnetization and thickness product smaller than that of a granular layer of the aforementioned exchange layer structure, and the granular layers of the exchange layer structures have magnetization directions which are mutually antiparallel.

Reference will now be made, by way of example, to the accompanying drawings, in which:
FIG. 1 is a cross sectional view showing an important part of a first example of a magnetic recording medium not embodying the present invention;
FIG 2 is a cross sectional view showing an important part of a second example of a magnetic recording medium not embodying the present invention;
FIG. 3 is a diagram showing an in-plane magnetization curve of a single CoPt layer having a thickness of 10 nm on a Si substrate;
FIG. 4 is a diagram showing an in-plane magnetization curve of two CoPt layers separated by a Ru layer having a thickness of 0.8 nm;
FIG. 5 is a diagram showing an in-plane magnetization curve of two CoPt layers separated by a Ru layer having a thickness of 1.4 nm;
FIG. 6 is a diagram showing an in-plane magnetization curve of two CoCrPt layers separated by a Ru having a thickness of 0.8 nm;
FIG. 7 is a cross sectional view showing an important part of a magnetic storage apparatus;
FIG. 8 is a plan view showing the important part of the magnetic storage apparatus;
FIG. 9 is a diagram showing an in-plane magnetization curve for a magnetic recording medium having a single CoCrPtB layer grown on a NiAl layer on glass;
FIG. 10 is a diagram showing an in-plane magnetization curve for a magnetic recording medium having two ferromagnetic layers of CoCrPtB separated by a Ru layer having a thickness of 0.8 nm on a NiP coated Al-Mg substrate;
FIG. 11 is a diagram showing an in-plane magnetization curve for a magnetic recording medium having two ferromagnetic-layers of CoCrPtB separated by a Ru layer on a NiP coated Al substrate;
FIG. 12 is a diagram showing an in-plane magnetization curve for a magnetic recording medium having three ferromagnetic layers of CoCrPtB separated by a Ru layer between each two adjacent CoCrPtB layers on a NiP coated Al substrate;
FIG. 13 is a diagram showing an in-plane magnetization curve for a magnetic recording medium having two negatively coupled ferromagnetic layers of CoCrPtB separated by a Ru layer, on a NiAl coated glass substrate;
FIG. 14 is a diagram showing an in-plane magnetization curve shown in FIG. 13 in comparison with a magnetic recording medium having a single ferromagnetic layer of CoCrPtB on a NiAl coated glass substrate;
FIG. 15 is a diagram showing signal decays of the magnetic recording media having two and three ferromagnetic layers, in comparison with a signal decay of the magnetic recording medium having the single ferromagnetic layer;
FIG. 16 is a diagram showing M-H curves of the magnetic recording medium having the two negatively coupled ferromagnetic layers at different temperatures;
FIG. 17 is a diagram showing the temperature dependence of the coercivity for the magnetic recording medium having the characteristics shown in FIG. 16;
FIG. 18 is a diagram showing the PW50 dependence on the effective and total ferromagnetic layer thickness of the magnetic recording media having one, two and three ferromagnetic layers;
FIG. 19 is a diagram showing the effective thickness dependence of the change in isolated wave medium SNR; and
FIG. 20 is a cross sectional view showing an important part of am embodiment of a magnetic recording medium according to the present invention.

S. S. P. Parkin, "Systematic Variation of the Strength and Oscillation Period of Indirect Magnetic Exchange Coupling through the 3d, 4d, and 5d Transition Metals", Phys. Rev. Lett. Vol.67, 3598 (1991) describes several magnetic transition metals such as Co, Fe and Ni that are coupled through thin non-magnetic interlayers such as Ru and Rh. On the other hand, U.S. Patent No.5,701,223 proposes a spin-valve which employs the above described layers as laminated pinning layers to stabilize the sensor.

For a particular Ru or Ir layer thickness between two ferromagnetic layers, the magnetizations can be made parallel or antiparallel. For example, for a structure made up of two ferromagnetic layers of different thickness with antiparallel magnetizations, the effective grain size of a magnetic recording medium can be increased without significantly affecting the resolution. A signal amplitude reproduced from such a magnetic recording medium is reduced due to the opposite magnetizations, but this can be rectified by adding another layer of appropriate thickness and magnetization direction, under the laminated magnetic layer structure, to thereby cancel the effect of one of the layers. As a result, it is possible to increase the signal amplitude reproduced from the magnetic recording medium, and to also increase the effective grain volume. Thermally stable written bits can therefore be realized.

The thermal stability of written bits can be increased by exchange coupling the magnetic layer to another ferromagnetic layer with an opposite magnetization or by a laminated ferrimagnetic structure. The ferromagnetic layer or the laminated ferrimagnetic structure is made up of exchange-decoupled grains as the magnetic layer. In other words, the present invention uses an exchange pinning ferromagnetic layer or a ferrimagnetic multilayer to improve the thermal stability performance of the magnetic recording medium.

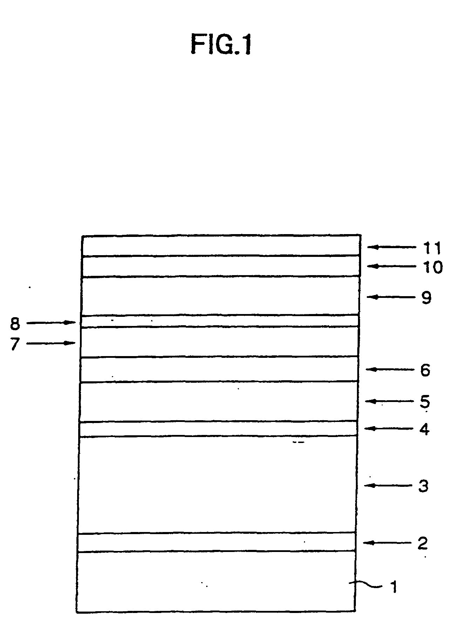

FIG. 1 is a cross sectional view showing an important part of a first example of a magnetic recording medium which does not embody the present invention, but is useful for understanding it.

The magnetic recording medium includes a non-magnetic substrate 1, a first seed layer 2, a NiP layer 3, a second seed layer 4, an underlayer 5, a non-magnetic intermediate layer 6, a ferromagnetic layer 7, a non-magnetic coupling layer 8, a magnetic layer 9, a protection layer 10, and a lubricant layer 11 which are stacked in the order shown in FIG. 1.

For example, the non-magnetic substrate 1 is made of Al, Al alloy or glass. This non-magnetic substrate 1 may or may not be-mechanically textured. The first seed layer 2 is made of Cr or Ti, for example, especially in the case where the non-magnetic substrate 1 is made of glass. The NiP layer 3 is preferably oxidized and may or may not be mechanically textured. The second seed layer 4 is provided to promote a (001) or a (112) texture of the underlayer 5 when using a B2 structure alloy such as NiAl and FeAl for the underlayer 5. The second seed layer 4 is made of an appropriate material similar to that of the first seed layer 2.

In a case where the magnetic recording medium is a magnetic disk, the mechanical texturing provided on the non-magnetic substrate 1 or the NiP layer 3 is made in a circumferential direction of the disk, that is, in a direction in which tracks of the disk extend.

The non-magnetic intermediate layer 6 is provided to further promote epitaxy, narrow the grain distribution of the magnetic layer 9, and orient the anisotropy axes of the magnetic layer 9 along a plane parallel to the recording surface of the magnetic recording medium. This non-magnetic intermediate layer 6 is made of a hcp structure alloy such as CoCr-M, where M = B, Mo, Nb, Ta, W, Cu or alloys thereof, and has a thickness in a range of 1 to 5 nm.

The ferromagnetic layer 7 is made of Co, Ni, Fe, Co-based alloy, Ni-based alloy, Fe-based alloy or the like. In other words, alloys such as CoCrTa, CoCrPt and CoCrPt-M, where M = B, Mo, Nb, Ta, W, Cu or alloys thereof may be used for the ferromagnetic layer 7. This ferromagnetic layer 7 has a thickness in a range of 2 to 10 nm. The non-coupling magnetic layer 8 is made of Ru, Ir, Rh, Cr, Cu, Ru-based alloy, Ir-based alloy, Rh-based alloy, Cu-based alloy, Cr-based alloy or the like. This non-magnetic coupling layer 8-preferably has a thickness in a range of 0.4 to 1.0 nm for antiparallel coupling using Ru, and preferably of the order of approximately 0.6 to 0.8 nm for an antiparallel coupling using Ru. For this particular thickness range of the non-magnetic coupling layer 8, the magnetizations of the ferromagnetic layer 7 and the magnetic layer 9 are antiparallel. The ferromagnetic layer 7 and the non-magnetic coupling layer 8 form an exchange layer structure.

For a ferromagnetic layer 7 made of a Fe-based alloy, Cr forms a better non-magnetic coupling layer 8. In this case, the Cr non-magnetic coupling layer 8 has an optimum thickness of approximately 1.8 nm.

The magnetic layer 9 is made of Co or a Co-based alloy such as CoCrTa, CoCrPt and CoCrPt-M, where M = B, Mo, Nb, Ta, W, Cu or alloys thereof. The magnetic layer 9 has a thickness in a range of 5 to 30 nm. Of course, the magnetic layer 9 is not limited to a single-layer structure, and a multi-layer structure may be used for the magnetic layer 9.

The protection layer 10 is made of C, for example. In addition, the lubricant layer 11 is made of an organic lubricant, for example, for use with a magnetic transducer such as a spin-valve head. The protection layer 10 and the lubricant layer 11 form a protection layer structure on the recording surface of the magnetic recording medium.

Obviously, the layer structure under the exchange layer structure is not limited to that shown in FIG. 1. For example, the underlayer 5 may be made of Cr or Cr-based alloy and formed to a thickness in a range of 5 to 40 nm on the substrate 1, and the exchange layer structure may be provided on this underlayer 5.

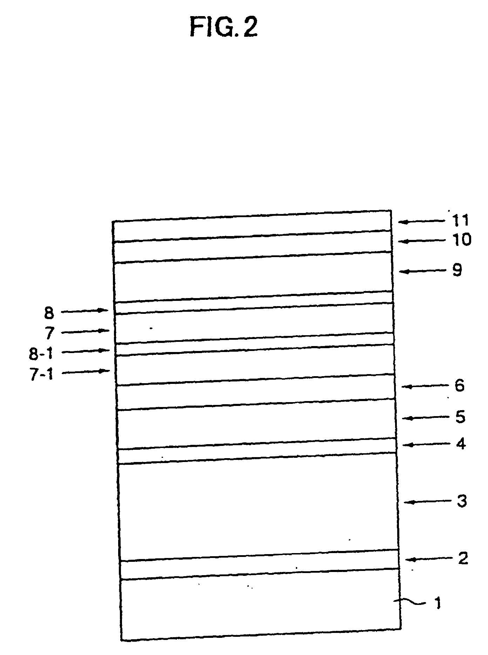

Next, a description will be given with reference to Fig. 2 of a second example of a magnetic recording medium which does not embody the present invention, but is useful for understanding it. In FIG. 2, those parts which are the same as those corresponding parts in FIG. 1 are designated by the same reference numerals, and a description thereof will be omitted.

In this second example of the magnetic recording medium, the exchange layer structure includes two non-magnetic coupling layers 8 and 8-1, and two ferromagnetic layers 7 and 7-1, which form a ferrimagnetic multilayer. This arrangement increases the effective magnetization and signal, since the magnetizations of the two non-magnetic coupling layers 8 and 8-1 cancel each other instead of a portion of the magnetic layer 9. As a result, the grain volume and thermal stability of magnetization of the magnetic layer 9 are effectively increased. More bilayer structures made up of the pair of ferromagnetic layer and non-magnetic coupling layer may be provided additionally to increase the effective grain volume, as long as the easy axis of magnetization are appropriately oriented for the subsequently provided layers.

The ferromagnetic layer 7-1 is made of a material similar to that of ferromagnetic layer 7, and has a thickness range selected similarly to the ferromagnetic layer 7. In addition, the non-magnetic coupling layer 8-1 is made of a material similar to that of the non-magnetic coupling layer 8, and has a thickness range selected similarly to the non-magnetic coupling layer 8. Within the ferromagnetic layers 7-1 and 7, the c-axes are preferably in-plane and the grain growth columnar.

In this embodiment, the magnetic anisotropy of the ferromagnetic layer 7-1 is preferably higher than that of- the ferromagnetic layer 7. However, the magnetic anisotropy of the ferromagnetic layer 7-1 may be the same as or be higher than that of, the magnetic layer 9.

Furthermore, a remanent magnetization and thickness product of the ferromagnetic layer 7 may be smaller than that of the ferromagnetic layer 7-1.

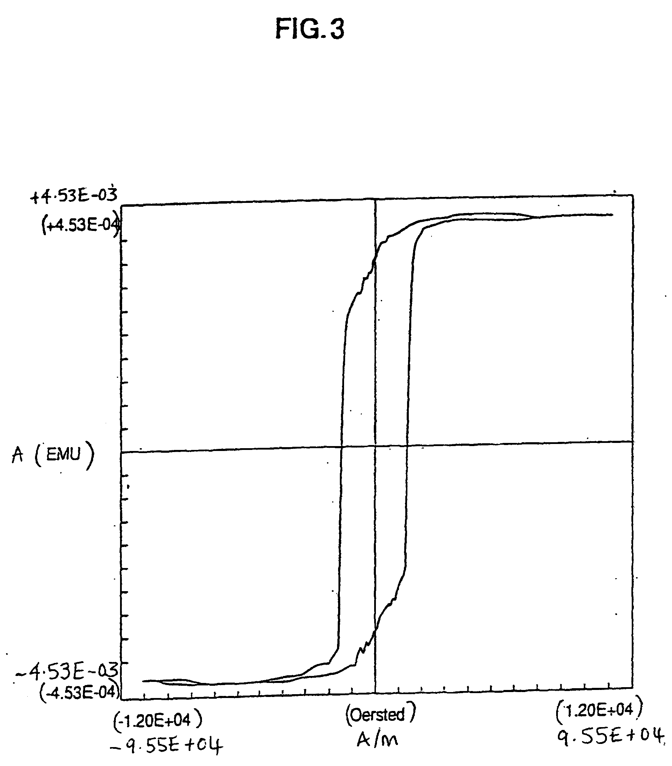

FIG. 3 is a diagram showing an in-plane magnetization curve of a single CoPt layer having a thickness of 10 nm on a Si substrate. In FIG. 3, the ordinate indicates the magnetization ( A ), and the abscissa indicates the magnetic field (A/m). Conventional magnetic recording media show a behavior similar to that shown in FIG. 3.

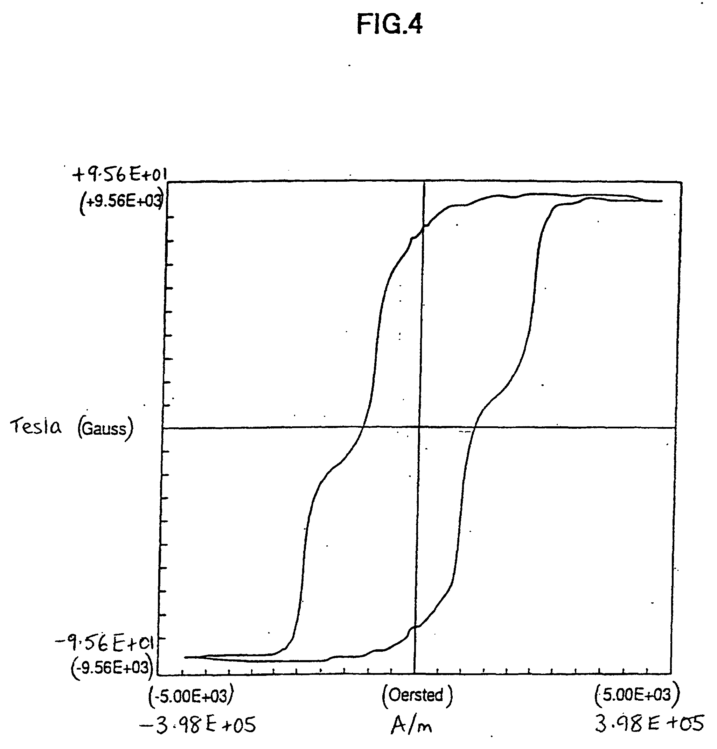

FIG. 4 is a diagram showing an in-plane magnetization curve of two CoPt layers separated by a Ru layer having a thickness of 0.8 nm, as in the case of the first example of the magnetic recording medium. In FIG. 4, the ordinate indicates the magnetization (Tesla), and the abscissa indicates the magnetic field (A/m). As may be seen from FIG. 4, the loop shows shifts near the magnetic field which indicate the antiparallel coupling.

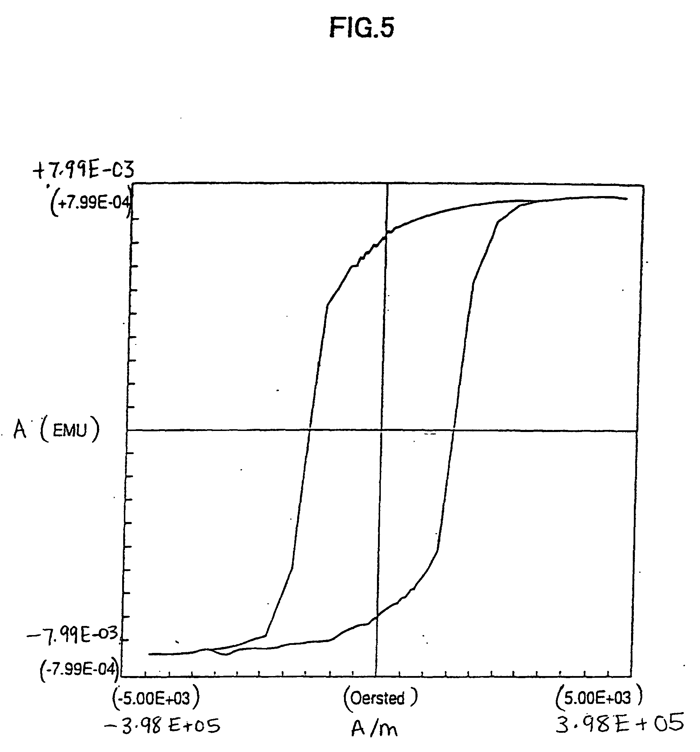

FIG. 5 is a diagram showing an in-plane magnetization curve of two CoPt layers separated by a Ru layer having a thickness of 1.4 nm. In FIG. 5, the ordinate indicates the magnetization ( A ), and the abscissa indicates the magnetic field (A/m). As may be seen from FIG. 5, the magnetizations of the two CoPt layers are parallel.

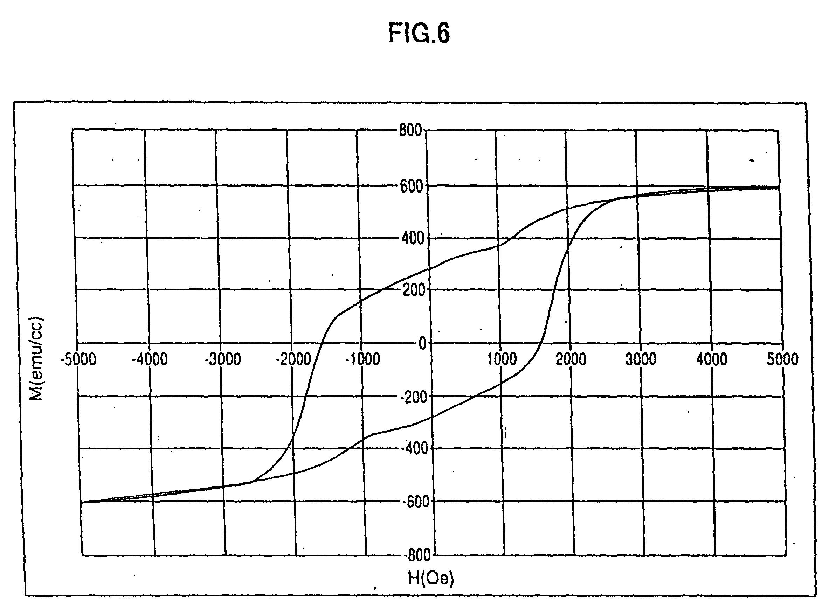

FIG. 6 is a diagram showing an in-plane magnetization curve for two CoCrPt layers separated by a Ru having a thickness of 0.8 nm, as in the case of the second embodiment of the magnetic recording medium. In FIG. 6, the ordinate indicates the magnetization (emu/cc), and the abscissa indicates the field (Oe). As may be seen from FIG. 6, the loop shows shifts near the field which indicate the antiparallel coupling. In FIG. 6 and following Figures lemu/cc = 1.0 E+07 Am⁻³ and 1Oe = 79.58 A/m.

From FIGS. 3 and 4, it may be seen that the antiparallel coupling can be obtained by the provision of the exchange layer structure. In addition, it may be seen by comparing FIG. 5 with FIGS. 4 and 6 that the non-magnetic coupling layer 8 is desirably in the range of 0.4 to 1.0 nm in order to achieve the antiparallel coupling.

Therefore, according to the first and second examples of the magnetic recording medium, it is possible to effectively increase the apparent grain volume of the magnetic layer by the exchange coupling provided between the magnetic layer and the ferromagnetic layer via the non-magnetic coupling layer, without sacrificing the resolution. In other words, the apparent thickness of the magnetic layer is increased with regard to the grain volume of the magnetic layer so that a thermally stable medium can be obtained, and in addition, the effective thickness of the magnetic layer is maintained since cancellation of signals especially from the bottom layers is achieved. This allows higher linear density recording that is otherwise not possible for thick media. As a result, it is possible to obtain a magnetic recording medium with reduced medium noise and thermally stable performance.

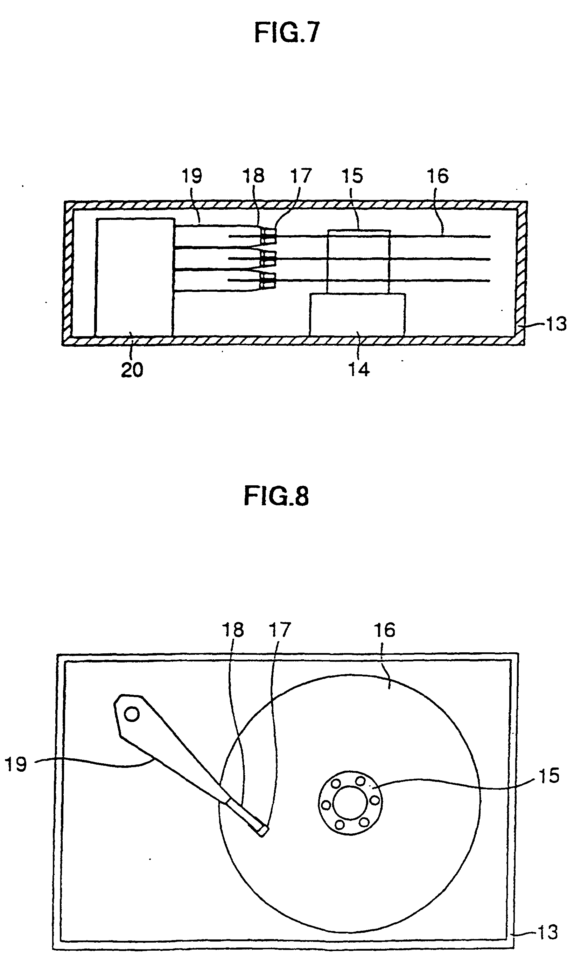

Next, a description will be given of a magnetic storage apparatus, by referring to FIGS. 7 and 8. FIG. 7 is a cross sectional view showing an important part of this magnetic storage apparatus, and FIG. 8 is a plan view showing the important part of this magnetic storage apparatus.

As shown in FIGS. 7 and 8, the magnetic storage apparatus generally includes a housing 13. A motor 14, a hub 15, a plurality of magnetic recording media 16, a plurality of recording and reproducing heads 17, a plurality of suspensions 18, a plurality of arms 19, and an actuator unit 20 are provided within the housing 13. The magnetic recording media 16 are mounted on the hub 15 which is rotated by the motor 14. The recording and reproducing head 17 is made up of a reproducing head such as a MR or GMR head, and a recording head such as an inductive head. Each recording and reproducing head 17 is mounted on the tip end of a corresponding arm 19 via the suspension 18. The arms 19 are moved by the actuator unit 20. The basic construction of this magnetic storage apparatus is known, and a detailed description thereof will be omitted in this specification.

This magnetic storage apparatus is characterized by the magnetic recording media 16. Each magnetic recording medium 16 has the structure of the magnetic recording medium described above in conjunction with FIGS. 1 and 2. Of course, the number of magnetic recording media 16 is not limited to three, and only one, two or four or more magnetic recording media 16 may be provided. Further, each magnetic recording medium 16 may have the structure of any of the magnetic recording medium which will be described later.

The basic construction of the magnetic storage unit is not limited to that shown in FIGS. 7 and 8. In addition, the magnetic recording medium used in the present invention is not limited to a magnetic disk.

In the following description, the ferromagnetic layer of the exchange layer structure and the magnetic layer will also be referred to as ferromagnetic layers forming a magnetic layer structure.

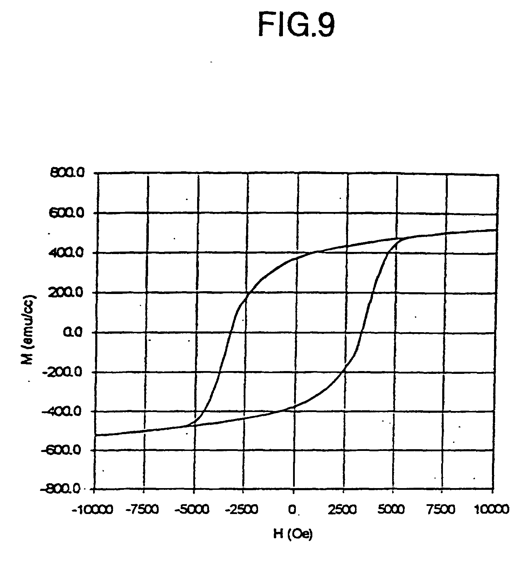

FIG. 9 is a diagram showing an in-plane magnetization curve for a magnetic recording medium having a single layer of CoCrPtB grown on a NiAl layer on glass. In FIG. 9, the ordinate indicates the magnetization M (emu/cc), and the abscissa indicates the magnetic field H (Oe). Similar M-H curves are observed for a single Co-based layer grown on a Cr underlayer on NiP coated Al substrate or NiP coated glass substrate.

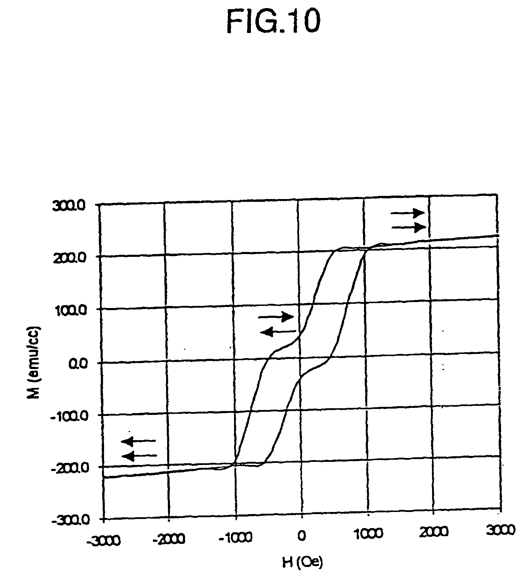

On the other hand, FIG. 10 is a diagram showing an in-plane magnetization curve for a magnetic recording medium having two ferromagnetic layers of CoCrPtB separated by a Ru layer having a thickness of 0.8 nm, sputtered on a NiP coated Al-Mg substrate. In FIG. 10, the ordinate indicates the magnetization M (emu/cc), and the abscissa indicates the magnetic field H (Oe). As may be seen from FIG. 10, the magnetization M abruptly decreases when the magnetic field H is around H=500 Oe which indicates an exchange coupling field of approximately 1000 Oe. The reduced magnetization M at H=0 evidences the anti-parallel coupling.

The optimum Ru thickness for the negative coupling can be determined not only by magnetometry but also by spin stand methods. The reproduced signal at low densities gives an indication of a remanent magnetization and thickness product Mrδ, where Mr denotes the remanent magnetization and δ denotes the effective thickness of the CoCrPtB layer, that is the ferromagnetic layer of the magnetic layer structure. If the Ru thickness is varied while the thicknesses of the two CoCrPtB layers are maintained constant, the reproduced signal shows a dip at the optimum Ru thickness. The optimum Ru thickness may depend on the magnetic materials and the processing used to form the ferromagnetic layers of the magnetic layer structure. For CoCrPt-based alloys manufactured above 150°C, the antiparallel coupling is induced for the Ru thickness in a range of approximately 0.4 to 1.0 nm.

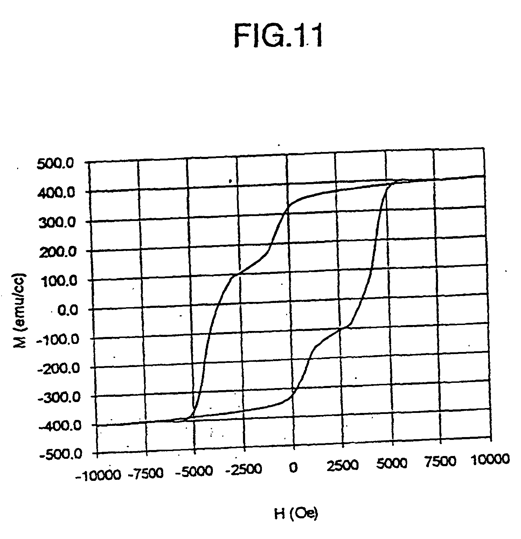

FIG. 11 is a diagram showing an in-plane magnetization curve for a magnetic recording medium having two ferromagnetic layers of CoCrPtB separated by a Ru layer, on a NiP coated Al substrate. In FIG. 11, the ordinate indicates the magnetization M (emu/cc), and the abscissa indicates the magnetic field H (Oe). FIG. 11 shows a case where a first CoCrPtB layer closer to the substrate is 8 nm thick, the Ru layer is 0.8 nm thick, and a second CoCrPtB layer further away from the substrate is 20 nm thick.

In this case, antiparallel coupling is observed but at higher negative magnetic fields. Unless the demagnetizing fields inside bits are very high, the antiparallel coupling is not completely achieved and very high reproduced signals are observed as the magnetizations in both the first and second CoCrPtB layers point in essentially the same direction. It is therefore necessary to reduce the coercivity Hc of the first CoCrPtB layer by reducing the thickness thereof or, by use of compositions which result in a lower coercivity Hc. For CoCrPt-based materials, the latter is usually achieved by increasing the Cr content and/or reducing the Pt content.

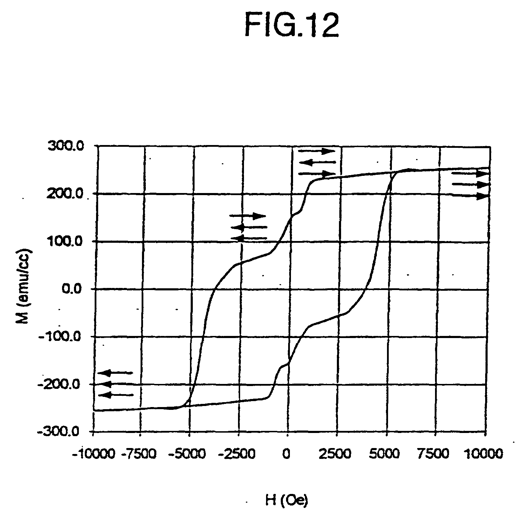

FIG. 12 is a diagram showing an in-plane magnetization curve for a magnetic recording medium having three ferromagnetic layers of CoCrPtB separated by a Ru layer between each two adjacent CoCrPtB layers, on a NiP coated Al substrate. In FIG. 12, the ordinate indicates the magnetization M (emu/cc), and the abscissa indicates the magnetic field H (Oe). FIG. 12 shows a case where first and second CoCrPtB layers closer to the substrate are 6 nm thick, a top third CoCrPtB layer is 20 nm thick, and the Ru layers between the first and second CoCrPtB layers and between the second and third CoCrPtB layers respectively are 0.8 nm thick. In this case, the magnetization M drops when the magnetic field H is H=500 Oe, which indicates that one of the first through third CoCrPtB layers reversed magnetization at positive fields. It is likely the middle second CoCrPtB layer which reversed magnetization since this middle second CoCrPtB layer is subject to a stronger reversing field due to the two interfaces. The interlayer interaction is therefore 500 Oe greater than the coercivity Hc of the middle second CoCrPtB layer.

However, at low negative magnetic fields, the bottom first CoCrPtB layer starts reversing magnetization, such that at approximately -1000 Oe, the magnetization of only the top third CoCrPtB layer is not reversed. Preferably, the bottom first CoCrPtB layer should not reverse magnetization at magnetic fields which are low compared to the demagnetizing fields inside bits, and this may be achieved for example by choosing the proper thickness and/or composition for the bottom first CoCrPtB layer. A magnetic recording medium which has these three ferromagnetic layers tends to have read-write performance which is better than a magnetic recording medium which only has a single ferromagnetic (magnetic) layer with no exchange coupling. There is a possibility that the reproduced signal will be reduced with time as more grains change layer magnetization configuration from parallel to antiparallel which is more stable. However, a solitary wave media signal-to-noise ratio (SNR) Siso/Nm of the magnetic-recording medium is expected to be maintained since the medium noise level is also correspondingly reduced. Hence, the bit error rate (BER) which is intimately related to the isolated wave medium SNR Siso/Nm will not be degraded.

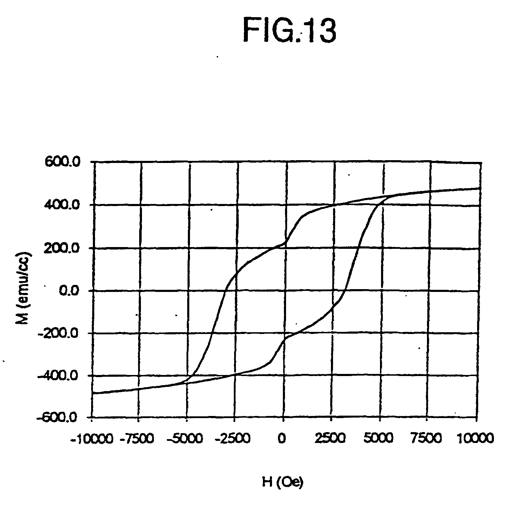

FIG. 13 is a diagram showing an in-plane magnetization curve for a magnetic recording medium having two negatively coupled ferromagnetic layers of CoCrPtB separated by a Ru layer, on a NiAl coated glass substrate. In FIG. 13, the ordinate indicates the magnetization M (emu/cc), and the abscissa indicates the magnetic field H (Oe). As shown in FIG. 13, the bottom CoCrPtB layer closer to the substrate reverses magnetization even before the magnetic field H becomes H=0 Oe.

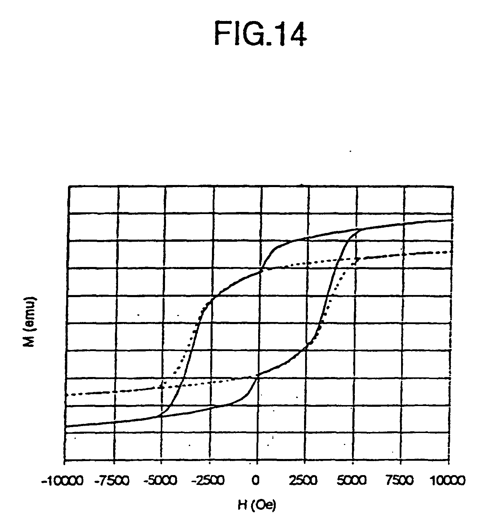

FIG. 14 is a diagram showing an in-plane magnetization curve shown in FIG. 13 in comparison with a magnetic recording medium having a single ferromagnetic layer of CoCrPtB on a NiAl coated glass substrate fabricated similarly to the recording medium having the two negatively coupled ferromagnetic layers. In FIG. 14, the ordinate indicates the magnetization M (emu/cc), and the abscissa indicates the magnetic field H (Oe). In FIG. 14, the in-plane magnetization curve shown in FIG. 13 is indicated by a solid line, and an in-plane magnetization curve for the recording medium with the single ferromagnetic layer is indicated by a dashed line. In FIG. 14, the saturation magnetization is normalized so as to illustrate the similarity of the M-H curve portions relevant to the magnetic recording.

When a head saturates a portion of the magnetic recording medium having the two negatively coupled ferromagnetic layers, the magnetization of both the two ferromagnetic layers is in the- head field direction, but as soon as the head field is no longer applied, the bottom ferromagnetic layer reverses magnetization and the situation inside a bit would be similar to that of the magnetic recording medium having the single ferromagnetic layer. A read head only senses the resultant magnetization. A person skilled in the art can therefore tune the thickness, composition and processing of the ferromagnetic layers, so that the magnetic recording medium behaves similarly to the conventional magnetic recording medium but with an enhanced thermal stability.

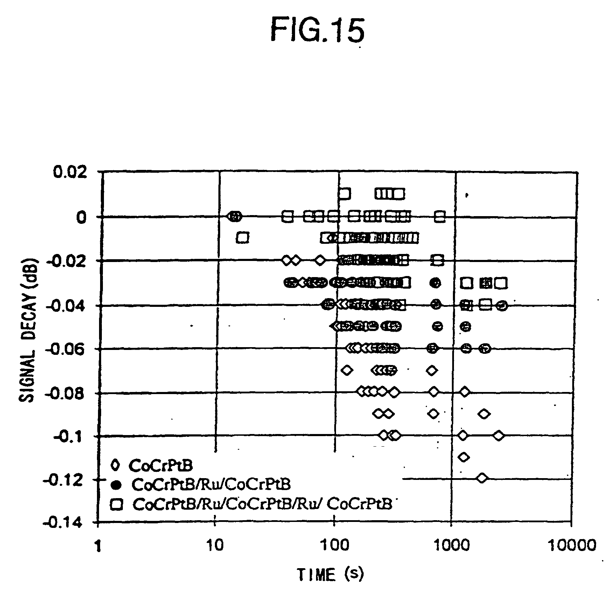

FIG. 15 is a diagram showing signal decays of magnetic recording media having two and three ferromagnetic layers, in comparison with a signal decay of a magnetic recording medium having the single ferromagnetic layer. In FIG. 15, the ordinate indicates the signal decay (dB) of the reproduced signal for 207 kfci bits, and the abscissa indicates the time (s). In FIG. 15, ◇ indicates the data of the magnetic recording medium having the single CoCrPtB layer which is 10 nm thick, ● indicates the data of the magnetic recording medium having the bottom first CoCrPtB layer which is 10 nm thick, the Ru layer which is 0.8 nm thick and the top second CoCrPtB layer which is 4 nm thick, and □ indicates the data of the magnetic recording medium having the bottom first CoCrPtB layer which is 10 nm thick, the first Ru layer which is 0.8 nm thick, the middle CoCrPtB layer which is 4 nm thick, the second Ru layer which is 0.8 nm thick and the top third CoCrPtB layer which is 4 nm thick. The ferromagnetic layer compositions are all the same, and the coercivity Hc measured with a Kerr magnetometer are approximately 2700 Oe (214.8 kA/m) and are similar. As may be seen from FIG. 15, the magnetic recording media having two ferromagnetic layers and three ferromagnetic layers show more thermally stable characteristics as the effective volume is increased, as compared to the magnetic recording medium having the single ferromagnetic layer and no exchange coupling.

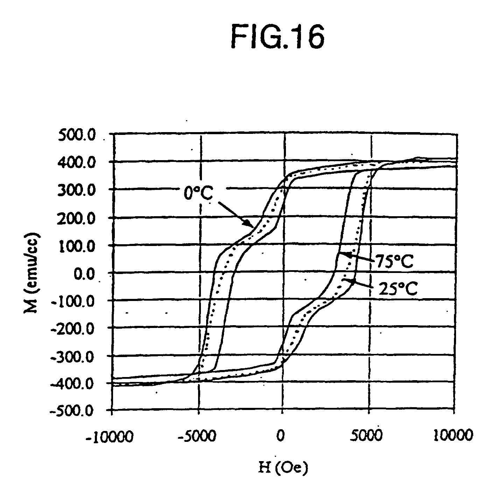

FIG. 16 is a diagram showing M-H curves of a magnetic recording medium having the two negatively coupled ferromagnetic layers at different temperatures. In FIG. 16, the ordinate indicates the magnetization M (emu/cc), the abscissa indicates the magnetic field H (Oe), and the data are shown for three different temperatures which are 0°C, 25°C and 75°C. A strong negative coupling is observed over a wide temperature range, and covers the range useful for magnetic recording media such as disks and tapes.

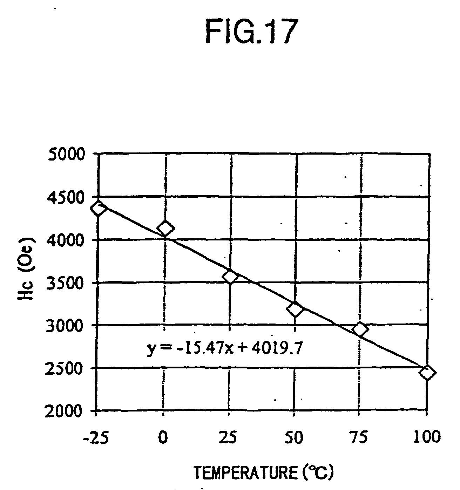

FIG. 17 is a diagram showing the temperature dependence of the coercivity for the magnetic recording medium having the characteristics shown in FIG. 16. In FIG. 17, the ordinate indicates the coercivity Hc (Oe), and the abscissa indicates the measured temperature (°C). In addition, y=Hc and x=temperature in the expression y=-15.47x+4019.7. The coercivity changeswith temperature dHc/dT=15.5 Oe/°C and is less than that of the magnetic recording medium having the single ferromagnetic layer. A typical dHc/dT for the magnetic recording medium having the single ferromagnetic layer is 16 to 17 Oe/°C. Accordingly, it may be clearly seen that the improved dHc/dT value obtained for the magnetic recording medium having the two negatively coupled ferromagnetic layers primarily arises from the increased effective volume.

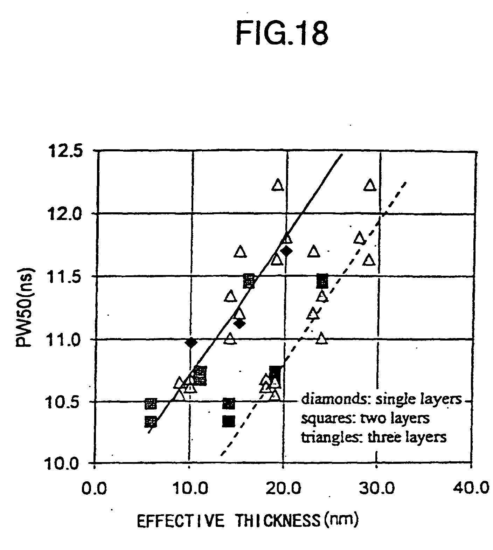

FIG. 18 is a diagram showing the PW50 dependence on the effective and total ferromagnetic layer thickness of the magnetic recording media having two and three ferromagnetic layers, in comparison with the PW50 dependence on the effective and total ferromagnetic layer thickness of the magnetic recording medium having the single ferromagnetic layer. In FIG. 18, the ordinate indicates the PW50 (ns), and the abscissa indicates the effective and total ferromagnetic layer thickness (nm). In FIG. 18, ◆ indicates the data of the magnetic recording medium having the single ferromagnetic layer, ■ indicates the data of the magnetic recording medium having two exchange-coupled ferromagnetic layers, and Δ indicates the data of the magnetic recording medium having three exchange-coupled ferromagnetic layers. The thickness and composition of the ferromagnetic layers are basically the same as those used to obtain the data shown in FIG. 15. For the data on the left side along the solid line, the thickness used is the effective thickness, that is magnetization cancellation due to an antiparallel configuration is assumed. Significant correlation is observed validating the assumption. When the total thickness of the ferromagnetic layer or layers is used, the data shifts to the right along the dotted line, which give unreasonably small PW50 values for the thicknesses involved when compared to those of the magnetic recording medium having the single ferromagnetic layer.

Therefore, although the writing resolution may be degraded due to the increased media thickness, the reading resolution is not, since cancellation of the signals from the lower layers occurs which may also explain the improved isolated wave medium SNR Siso/Nm over the magnetic recording medium having the single ferromagnetic layer. The isolated wave medium SNR Siso/Nm of the magnetic recording medium having the two exchange-coupled ferromagnetic layers and very low effective Mr δ is-especially improved over that of the magnetic recording medium having the single ferromagnetic layer. Such a very low effective Mrδ can be achieved when the two ferromagnetic layers have almost the same Mrδ. For the magnetic recording medium having the three exchange-coupled ferromagnetic layers, the performance is enhanced when the sum of the thicknesses of the bottom first and middle second ferromagnetic layers is not so different from the thickness of the top third ferromagnetic layer. This phenomenon is consistent with a similar phenomenon which occurs in double uncoupled layers since the best thickness combination of the double uncoupled layers is when both layers are of the same thickness.

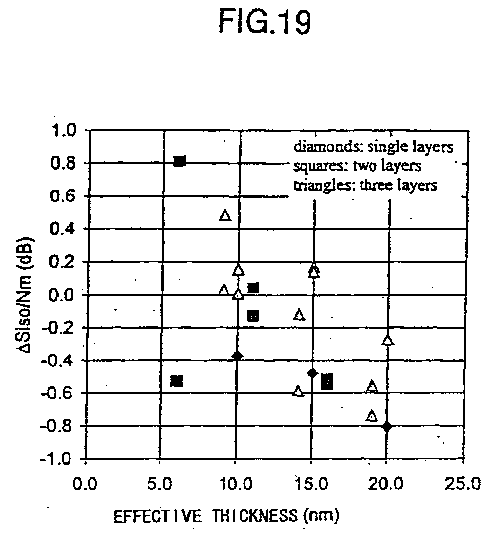

FIG. 19 is a diagram showing the effective thickness dependence of the change in isolated wave medium SNR. In FIG. 19, the ordinate indicates the change ΔSiso/Nm (dB) of the isolated wave medium SNR Siso/Nm, and the abscissa indicates the effective thickness (nm) of the ferromagnetic layers. In FIG. 19, the same symbols ◆, ■ and Δ are used to indicate the data of the three different magnetic recording media as in FIG. 18. It may be seen from FIG. 19 that good isolated wave medium SNR Siso/Nm is especially observed for the magnetic recording medium having the two exchange-coupled ferromagnetic layers with low Mrδ. Although the total thickness of the ferromagnetic layers in this case becomes greater than that of the magnetic recording medium having the single ferromagnetic layer, the read-write performance is hardly degraded, and in some cases even improved.

The present inventors have also found that, when at least one of the ferromagnetic layers of the magnetic layer structure is made up of a plurality of ferromagnetic layers which are in contact with each other and ferromagnetically coupled, a good performance is obtained especially when the lower ferromagnetic layer is Cr-rich such that the Cr content is 23 at% or greater, and the Cr content of the upper ferromagnetic layer is less. This indicates the crucial role of the lower ferromagnetic layer. According to the experiments conducted by the present inventors, it was found that the noise arising from imperfections in the lower ferromagnetic layer is effectively reduced due to cancellation from the succeeding ferromagnetic layers. In other words, it may be regarded that the lower layers form a large source of noise, but this embodiment can improve the SNR because the signals from the lower layers are cancelled such that most of the signals and thus also noise come from the upper layers.

The magnetic recording medium may further comprise at least a first exchange layer structure and a second exchange layer structure provided between the first exchange layer structure and the magnetic layer, where the second exchange layer structure has a ferromagnetic layer with a magnetic anisotropy smaller than that of a ferromagnetic layer of the first exchange layer structure, and the first and second exchange layer structures have ferromagnetic layers with magnetization directions which are mutually antiparallel.

The magnetic recording medium may further comprise at least a first exchange layer structure and a second exchange layer structure provided between the first exchange layer structure and the magnetic layer, where the second exchange layer structure has a ferromagnetic layer with a remanent magnetization and thickness product smaller than that of a ferromagnetic layer of the first exchange layer structure, and the first and second exchange layer structures have ferromagnetic layers with magnetization directions which are mutually antiparallel.

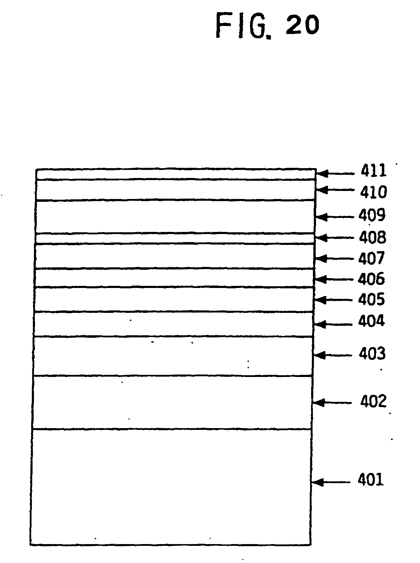

Next, the prior art will be briefly summarized before explaining features of the present invention in conjunction with FIG. 20.

Due to the development of the information processing technology, there are increased demands for high-density magnetic recording media. Characteristics required of the magnetic recording media to satisfy such demands include low noise, high coercivity, high remanence magnetization, and high resolution.

Conventionally, various measures have been proposed to reduce the noise in the magnetic recording media. A general magnetic recording medium basically includes a non-magnetic substrate made of Al or the like, and an underlayer, a magnetic recording layer, a protection layer and a lubricant layer which are stacked in this order on the substrate. For example, with respect to the underlayer, functions such as promoting the in-plane orientation of the magnetic recording layer and increasing the remanence magnetization and thermal stability of written bits are demanded, in order to improve the magnetization characteristic of the magnetic recording layer. When a suitable underlayer is used, it is possible to reduce the thickness of the magnetic recording layer or, to reduce the size of the magnetic grains and the grain size distribution width of the magnetic recording layer, thereby enabling noise reduction.

In addition, there are proposals to increase the resolution by reducing the thickness of the magnetic layer or,- to reduce the transition width between the written bits. There are also proposals to promote the Cr segregation of the CoCr-based alloy which forms the magnetic recording layer, so as to reduce the exchange coupling among the magnetic grains. These proposals have been made to reduce noise from various aspects.

As one technique which is effective in reducing noise, there is a proposal to employ a multi-layer structure for the magnetic recording layer, by separating the magnetic recording layer into upper and lower portions by a separation layer. By employing the multi-layer structure with the separation layer for the magnetic recording layer, it is possible to separate the magnetic coupling of the magnetic layers, and to positively reduce the noise.

However, in the magnetic recording layer having the multi-layer structure, a non-magnetic material such as CoCr-based alloys and Cr-based alloys are used for the separation layer. However, such non-magnetic materials easily mix with the magnetic layers which are provide above and below, thereby deteriorating the magnetic characteristics of the magnetic recording layer, and there was a problem in that the reproduced output obtained from such a magnetic recording medium is deteriorated thereby. Furthermore, the non-magnetic materials such as the CoCr-based alloys and Cr-based alloys virtually separate completely the magnetic coupling of the magnetic layers provided above and below. Hence, although such non-magnetic materials are preferable from the point of reducing the noise, the magnetic layers provided above and below become thermally unstable as a result. Consequently, in the case of a magnetic recording medium such as a magnetic disk which may be used under a relatively high temperature environment, there was a problem in that the detection sensitivity of written bits deteriorates due to the provision of such a separation layer.

Next, a description will be given of an embodiment of a magnetic recording medium according to the present invention. In this embodiment, at least one of the ferromagnetic layer and the magnetic layer of the first or second example described above has a granular layer structure. The granular layer-structure employed in this embodiment has ferromagnetic crystal grains uniformly distributed within a non-magnetic base material, so as to further isolate the magnetic grains.

In a case where both the ferromagnetic layer and the magnetic layer have the granular layer structure, the magnetization directions of the granular layers can be made mutually parallel or mutually antiparallel, similarly to the first and second examples described above, by making the non-magnetic coupling layer which is made of Ru or the like and disposed between the granular layers to have a predetermined thickness. As a result, it is possible to increase the effective volume, thereby improving the thermal stability of written bits and reducing the medium noise.

It is not essential for both the ferromagnetic layer and the magnetic layer to have the granular layer structure, and the granular layer structure may be employed for only one of the ferromagnetic layer and the magnetic layer. When using only one granular layer, it is desirable to make the magnetic layer, which forms the recording layer, to have the granular layer structure.

In this embodiment, the granular layer is magnetically exchange coupled in an opposite magnetization direction (antiparallel) to that of the other granular layer or the CoCr-based magnetic layer, so as to improve the thermal stability of the written bits. In other words, this embodiment is provided with a pinning structure for improving the thermal stability performance of the magnetic recording medium, and is also provided with the granular layer structure for further reducing the medium noise.

The granular layer structure refers to a layer structure in which ferromagnetic crystal grains are uniformly distributed within a non-magnetic base material, as taught in a Japanese Laid-Open Patent Application No.10-92637. A granular medium is obtained by applying this granular layer structure to the recording medium of the magnetic storage apparatus. In the conventional recording medium which uses a CoCr-based magnetic material for the magnetic recording layer, the Co and Cr segragations are used to promote isolation of the magnetic grains and to reduce the noise. But in the conventional recording medium, it was difficult to obtain a desired isolation state of the magnetic grains.

On the other hand, in a granular medium embodying the present invention, the ferromagnetic crystal grains are positively isolated by uniformly distributing the ferromagnetic crystal grains (metal) within the base material such as SiO₂ (ceramic material), and thus, it is possible to realize a medium with extremely low noise.

FIG. 20 is a cross sectional view showing an important part of an embodiment of the magnetic recording medium according to the present invention.

The magnetic recording medium includes a non-magnetic substrate 401, a first seed layer 402, a NiP layer 403, a second seed layer 404, an underlayer 405, a non-magnetic intermediate layer 406, a ferromagnetic layer 407, a non-magnetic coupling layer 408, a magnetic layer 409, a protection layer 410, and a lubricant layer 411 which are stacked in this order as shown in FIG. 20 .

For example, the non-magnetic substrate 401 is made of Al, Al alloy or glass. The non-magnetic substrate 401 may or may not be mechanically textured.

The first seed layer 402 is made of NiP, for example, especially in the case where the non-magnetic substrate 401 is made of glass. The NiP layer 403 may or may not be oxidized and may or may not be mechanically textured. The second seed layer 404 is provided to promote a (001) or a (112) texture of the underlayer 405 when the underlayer 405 is made of an alloy having the B2 structure, such as NiAl and FeAl. The second seed layer 404 is made of a material similar to that of the first seed layer 402.

In a case where the magnetic recording medium is a magnetic disk, the mechanical texturing provided on the non-magnetic substrate 401 or the NiP layer 403 is made in a circumferential direction of the disk, that is, in a direction in which tracks of the disk extend.

The non-magnetic intermediate layer 406 is provided to further promote epitaxy, narrow the grain distribution width of the magnetic layer 409, and orient the anisotropy axes of the magnetic layer 409 along a plane parallel to the recording surface of the magnetic recording medium. However, it is not essential to provide this non-magnetic intermediate layer 406. This non-magnetic intermediate layer 406 is made of a hcp structure alloy such as CoCr-M, where M = B, Mo, Nb, Ta, W, Cu or alloys thereof, and has a thickness in a range of 1 to 5 nm.

The ferromagnetic layer 407 may be made of a granular layer which is formed by uniformly distributing ferromagnetic crystal grains into a non-magnetic base material. In this case, the ferromagnetic crystal grains may be made of Co, Ni, Fe, Ni-based alloys, Fe-based alloys, or Co-based alloys such as CoCrTa, CoCrPt and CoCrPt-M, where M = B, Mo, Nb, Ta, W, Cu or alloys thereof. It is preferable that the grain diameter of the ferromagnetic crystal grain is in a range of approximately 2 to 30 nm. Further, the non-magnetic base material may be made of a ceramic material such as SiO₂, Al₂O₃ and MgO or an oxide material such as NiO. On the other hand, the ferromagnetic layer 407 may be made of a CoCr-based magnetic material if not employing the granular layer structure.

The granular layer structure changes form depending on fundamental physical constants or properties, such as cohesive energy, surface energy and elastic strain energy of the ferromagnetic crystal grains and the non-magnetic base material. Accordingly, an extremely large number of combinations of the magnetic material used for the ferromagnetic crystal grains and the ceramic or oxide material used for the non-magnetic base material exist, and the combination may be appropriately adjusted to suit the needs.

It is preferable that the granular layer structure is used with priority for the magnetic layer 409, in which case the ferromagnetic layer 407 may be made of a CoCr-based magnetic material as described above. The reason for the preferable use of the granular layer structure for the magnetic layer 409 is because, due to the exchange coupling caused by the provision of the non-magnetic coupling layer 408, it is the uppermost magnetic layer 409 which contributes most to the noise reduction.

Of course, the ferromagnetic layer 407 and the magnetic layer 409 are not limited to a single-layer structure, and a multi-layer structure may be used for each of the ferromagnetic layer 407 and the magnetic layer 409.

The non-magnetic coupling layer 408 is made of Ru, Rh, Ir, Ru-based alloys, Rh-based alloys, Ir-based alloys, or the like. For example, the non-magnetic coupling layer 408 may be added with a ceramic material such as SiO₂ and Al₂O₃ or an oxide material such as NiO which are used for the granular layer proposed in the Japanese Laid-Open Patent Application No.10-149526. The addition of the ceramic or oxide material to the non-magnetic coupling layer 408 promotes the epitaxial growth of the non-magnetic coupling layer 408 and the magnetic layer 409, thereby further improving the signal-to-noise (S/N) ratio of the magnetic recording medium.

The protection layer 410 and the lubricant layer 411 are similar to those of the first and second examples described above.

The ferromagnetic layer 407 may have a thickness in a range of approximately 2 to 10 nm, and the magnetic layer 409 may have a thickness in a range of approximately 5 to 30 nm.

In addition, the magnetization directions of the ferromagnetic layer 407 and the magnetic layer 409 may be mutually antiparallel or mutually parallel.

When making the magnetization directions of the ferromagnetic layer 407 and the magnetic layer 409 mutually antiparallel, the non-magnetic coupling layer 408 desirably is made of a material selected from a group of Ru, Rh, Ir, Ru-based alloys, Rh-based alloys and Ir-based alloys, and has a thickness in a range of approximately 0.4 to 1.0 nm.

When making the magnetization directions of the ferromagnetic layer 407 and the magnetic layer 409 mutually parallel, the non-magnetic coupling layer 408 desirably is made of a material selected from a group of Ru, Rh, Ir, Ru-based alloys, Rh-based alloys and Ir-based alloys, and has a thickness in a range of approximately 0.2 to 0.4 nm and 1.0 to 1.7 nm. Ru is desirably used for the non-magnetic coupling layer 408.

The number of exchange layer structures having the granular layer structure described above is of course not limited to one, and first and second exchange layer structures of the second example described above may be provided with the granular layer structure. In this case, it is preferable that the magnetic anisotropy of the granular layer in the second exchange layer structure is set smaller than that of the granular layer in the first exchange layer structure which is disposed under the second exchange layer structure. Furthermore, it is preferable that the remanence magnetization and thickness product of the granular layer in the second exchange layer structure is set smaller than that of the granular layer in the first exchange layer structure which is disposed under the second exchange layer structure.

## Claims

1. A magnetic recording medium comprising:
at least one exchange layer structure (407, 408); and
a magnetic layer (409) provided on the exchange layer structure (407, 408);
said exchange layer structure (407, 408) including a ferromagnetic layer (407) and a non-magnetic coupling layer (408) provided on the ferromagnetic layer (407);
at least one of said ferromagnetic layer (407) and said magnetic layer (409) having a granular layer texture in which ferromagnetic crystal grains are uniformly distributed within a non-magnetic base material;
**characterised in that** said ferromagnetic layer (407) and said magnetic layer (409) are exchange-coupled and have anti-parallel magnetizations.

2. The magnetic recording medium as claimed in claim 1, wherein said ferromagnetic crystal grains are made of a material selected from a group consisting of Co, Ni, Fe, Ni-based alloys, Fe-based alloys, and Co-based alloys including CoCrTa, CoCrPt and CoCrPt-M, where M = B, Mo, Nb, Ta, W, Cu and alloys thereof.

3. The magnetic recording medium as claimed in claim 1 or 2, wherein said non-magnetic base material is made of a material selected from a group consisting of ceramic materials and oxide materials.

4. The magnetic recording medium as claimed in any preceding claim, wherein at least one additional exchange layer structure is provided between the exchange layer structure (407, 408) of claim 1 and the magnetic layer (409), where the exchange layer structures (407, 408) have a granular layer texture, the additional exchange layer structure has a granular layer with a magnetic anisotropy smaller than that of a granular layer of the exchange layer structure (407, 408) of claim 1, and the granular layers of the exchange layer structures (407, 408) have magnetization directions which are mutually anti-parallel.

5. The magnetic recording medium as claimed in any one of claims 1 to 3, wherein at least an additional exchange layer structure is provided between the exchange layer structure (407, 408) of claim 1 and the magnetic layer (409), where the exchange layer structures (407, 408) have a granular layer texture, the additional exchange layer structure has a granular layer with a remanance magnetization and thickness product smaller than that of a granular layer of the exchange layer structure (407, 408) of claim 1, and the granular layers of the exchange layer structures (407, 408) have magnetization directions which are mutually anti-parallel.

## Patentansprüche

1. Magnetisches Aufzeichnungsmedium mit:
wenigstens einer Austauschschichtstruktur (407, 408); und
einer magnetischen Schicht (409), die auf der Austauschschichtstruktur (407, 408) vorgesehen ist;
wobei die Austauschschichtstruktur (407, 408) eine ferromagnetische Schicht (407) enthält, und eine nichtmagnetische Kopplungsschicht (408), die auf der ferromagnetischen Schicht (407) vorgesehen ist;
wenigstens eine von der ferromagnetischen Schicht (407) und der magnetischen Schicht (409) eine granulare Schichttextur hat, in der ferromagnetische Kristallkörner innerhalb eines nichtmagnetischen Basismaterials gleichförmig verteilt sind;
**dadurch gekennzeichnet, daß** die ferromagnetische Schicht (407) und die magnetische Schicht (409) austauschgekoppelt sind und antiparallele Magnetisierungen haben.

2. Magnetisches Aufzeichnungsmedium nach Anspruch 1, bei dem die ferromagnetischen Kristallkörner aus einem Material sind, das ausgewählt ist aus einer Gruppe bestehend aus Co, Ni, Fe, Legierungen auf Ni-Basis, Legierungen auf Fe-Basis und Legierungen auf Co-Basis, die CoCrTa, CoCrPt und CoCrPt-M enthalten, wobei M = B, Mo, Nb, Ta, W, Cu und deren Legierungen entspricht.

3. Magnetisches Aufzeichnungsmedium nach Anspruch 1 oder 2, bei dem das nichtmagnetische Basismaterial aus einem Material ist, das ausgewählt ist aus einer Gruppe bestehend aus keramischen Materialien und Oxidmaterialien.

4. Magnetisches Aufzeichnungsmedium nach irgendeinem vorhergehenden Anspruch, bei dem wenigstens eine zusätzliche Austauschschichtstruktur zwischen der Austauschschichtstruktur (407, 408) von Anspruch 1 und der magnetischen Schicht (409) vorgesehen ist, wobei die Austauschschichtstrukturen (407, 408) eine granulare Schichttextur haben, die zusätzliche Austauschschichtstruktur eine granulare Schicht mit einer magnetischen Anisotropie hat, die kleiner als jene einer granularen Schicht der Austauschschichtstruktur (407, 408) von Anspruch 1 ist, und die granularen Schichten der Austauschschichtstrukturen (407, 408) Magnetisierungsrichtungen haben, die zueinander antiparallel sind.

5. Magnetisches Aufzeichnungsmedium nach irgendeinem der Ansprüche 1 bis 3, bei dem wenigstens eine zusätzliche Austauschschichtstruktur zwischen der Austauschschichtstruktur (407, 408) von Anspruch 1 und der magnetischen Schicht (409) vorgesehen ist, wobei die Austauschschichtstrukturen (407, 408) eine granulare Schichttextur haben, die zusätzliche Austauschschichtstruktur eine granulare Schicht mit einem Produkt aus der remanenten Magnetisierung und der Dicke hat, das kleiner als jenes von einer granularen Schicht der Austauschschichtstruktur (407, 408) von Anspruch 1 ist, und die granularen Schichten der Austauschschichtstrukturen (407, 408) Magnetisierungsrichtungen haben, die zueinander antiparallel sind.

## Revendications

1. Support d'enregistrement magnétique comprenant :
au moins une structure à couche d'échange (407, 408) ; et
une couche magnétique (409) prévue sur la couche d'échange (407, 408) ;
ladite structure à couche d'échange (407, 408) comprenant une couche ferromagnétique (407) et une couche de couplage non magnétique (408) prévue sur la couche ferromagnétique (407) ;
au moins une de ladite couche ferromagnétique (407) et de ladite couche magnétique (409) ayant une texture de couche granulaire dans laquelle des grains de cristal ferromagnétique sont uniformément distribués dans un matériau de base non magnétique ;
**caractérisé en ce que** ladite couche ferromagnétique (407) et ladite couche magnétique (409) sont couplées par échange et ont des magnétisations antiparallèles.

2. Support d'enregistrement magnétique selon la revendication 1, dans lequel lesdits grains de cristal ferromagnétique sont faits d'un matériau choisi à partir d'un groupe comprenant Co, Ni, Fe, des alliages à base de Ni, des alliages à base de Fe, et des alliages à base de Co comprenant CoCrTa, CoCrPt et CoCrPt-M, où M = B, Mo, Nb, Ta, W, Cu et des alliages de ceux-ci.

3. Support d'enregistrement magnétique selon la revendication 1 ou 2, dans lequel ledit matériau de base non magnétique est fait d'un matériau choisi à partir d'un groupe constitué de matériaux de céramique et de matériaux d'oxyde.

4. Support d'enregistrement magnétique selon l'une quelconque des revendications précédentes, dans lequel au moins une structure de couche d'échange supplémentaire est prévue entre la structure à couche d'échange (407, 408) de la revendication 1 et la couche magnétique (409), dans laquelle les structures de couche d'échange (407, 408) ont une texture de couche granulaire, la structure à couche d'échange supplémentaire a une couche granulaire avec une anisotropie magnétique inférieure à celle d'une couche granulaire de la structure à couche d'échange (407, 408) de la revendication 1, et les couches granulaires des structures de couche d'échange (407, 408) ont des directions de magnétisation qui sont mutuellement anti-parallèles.

5. Support d'enregistrement magnétique selon l'une quelconque des revendications 1 à 3, dans lequel au moins une structure à couche d'échange supplémentaire est prévue entre la structure à couche d'échange (407, 408) de la revendication 1 et la couche magnétique (409), où les structures de couche d'échange (407, 408) ont une structure à couche granulaire, la structure à couche d'échange supplémentaire a une couche granulaire avec un produit de magnétisation de rémanence et d'épaisseur inférieur à celui de la couche granulaire de la structure à couche d'échange (407, 408) de la revendication 1, et les couches granulaires des structures à couche d'échange (407, 408) ont des directions de magnétisation qui sont mutuellement anti-parallèles.
